# EUROPEAN PATENT SPECIFICATION

(11) **EP 2 964 057 B1**
(45) Date of publication and mention of the grant of the patent: **09.01.2019**
(21) Application number: 14705401.9
(22) Date of filing: 14.02.2014
(51) Int. Cl.: A47G 1/06, A47G 1/10, E06B 3/98

(54) **CONNECTION ASSEMBLY**
VERBINDUNGSANORDNUNG
ENSEMBLE DE CONNEXION

(30) Priority: 04.03.2013 GB 201303811
(43) Date of publication of application: 13.01.2016
(73) Proprietor: Lawson, Richard John, Derbyshire DF6 2HA (GB)
(72) Inventor: Lawson, Richard John, Derbyshire DF6 2HA (GB)
(74) Representative: Sales, Robert Reginald
(86) International application number: PCT/GB2014/050428
(87) International publication number: WO 2014/135842

(56) References cited:
- JP-A- 2007 117 406
- US-A- 4 714 373
- US-A- 4 820 077
- US-A- 4 825 529
- US-B1- 6 339 891

## Description

This invention concerns connection assemblies, and particularly but not exclusively connection assemblies usable for connecting components of a frame of a display apparatus, and also frame assemblies incorporating such connection assemblies.

With display apparatus it is often required for the apparatus to be regularly erected and dismantled for use for instance at different exhibitions or other locations. Existing and previous frame constructions for display apparatus often requires the use of tools and fastening means such as screws to carry out erection and dismantling. Such tools may not always be to hand, and also the fastening means can be lost. It can also be quite time consuming to mount all the fastening means required.

Also such constructions have often not been sufficiently robust to survive regular erection and dismantling, and particularly by persons who may not use correct procedures for such operations. It is often required to join together two lengths of frame material in a display apparatus, and it may be required for the lengths to be at a required relative inclination to each other, from colinear to perpendicular.

Such lengths of frame material are often produced by for example extruding aluminium. The profiles of such extrusions are not always uniform, and it can therefore be difficult to rigidly mount together adjacent lengths of such frame material.

US4825529 A discloses a connection assembly of the prior art. According to the present invention there is provided a connection assembly for joining together two elongate frame members suitable for a display apparatus, which frame members each include a channel, wherein the channels of the frame members have flanges extending along their openings such that the openings of the channels are narrower than the remainder of the channels, which channels are alignable together when the frame members are connected, the assembly including an elongate link member with a first part locatable in the channel of a one of the frame members, and a second part locatable in the channel of the other of the frame members, a pair of engagement assemblies each locatable in the channel of a respective frame member, the engagement assemblies each include a body (24), a handle (26) and a connecting member (28), the handle being (26) pivotally mounted to the body to move the assembly between an engaged condition and a disengaged condition, the engagement assemblies being selectively movable between the engaged condition where each handle is moveable to cause a spaced pair of cam members to rotatably engage with the link member to urge the same against the floor of the channel in a respective frame member, and the disengaged condition where the cam members do not urge the link member against the channel, and the link member is slidably movable along the channel; in each engagement assembly the body is slidably movable along the channel of a frame member, but is of a size to be restrained within the channel and only slidably movable therealong, and the connecting member extends between the handle and the body, spaced from the pivotal mounting of the handle to the body.

The engagement assemblies may be arranged such that in the engaged condition the handle locates substantially within the channel of a respective frame member.

The cam members may each be rotatably movable between engaged and disengaged positions in opposite directions to each other.

A one of the cam members may be provided on the handle, and may be provided adjacent a pivotal mounting of the handle to the body.

The connecting member may at one end be pivotally mounted to the body, and the other cam member may be provided on the connecting member adjacent the pivotal mounting thereof to the body.

The other end of the connecting member may be movably mounted to a slot or slots in the handle.

The handle may be a snap fit on the body, and the connecting member may be a snap fit on the body.

The engagement assemblies may be made of metal and may be made for instance of zinc, and may be made by die casting.

In one embodiment the first and second parts of the link member are colinear.

In other embodiments the first and second parts of the link member are inclined relative to each other, and in a further embodiment may be perpendicular to each other.

The link member may be in the form of a length of plate, which plate may be of metal and for instance sprung steel.

The invention also provides a frame assembly, the assembly comprising two elongate frame members with one or more longitudinal channels on the exterior of the elongate members, and a connection assembly according to any of the preceding fourteen paragraphs provided on ends of the frame members and extending therebetween.

The elongate members may be extrusions, and may be aluminium extrusions.

An embodiment of the present invention will now be described by way of example only and with reference to the accompanying drawings in which:-
Figs. 1 to 9 are respectively sequential diagrammatic perspective views showing a connection assembly according to the invention being formed;
Fig. 10 is a side view of a first part of the assembly of Fig. 1 in a disengaged condition;
Fig. 11 is a cross sectional side view of the first part shown in Fig. 10 in a disengaged condition;
Fig. 12 is a side view of first and second parts of the assembly of Fig. 1 in a disengaged condition;
Fig. 13 is a cross sectional side view of the first and second parts of the assembly in a disengaged condition, with two areas of detail shown.
Fig. 14 is a side view of the first and second parts of the assembly in an engaged condition; and
Fig. 15 is a cross sectional side view of the first and second parts of the assembly in an engaged condition, with two areas of detail shown.

The drawings show a connection assembly 10 usable for interconnecting two extruded square section aluminium elongate frame members 12. Such frame members 12 may for instance be part of a display apparatus. In the drawings the frame members 12 are being shown mounted together perpendicularly to each other.

Each of the frame members 12 has a channel 14 on each face with flanges 16 on either side of the channel such that the channel 14 has a reduced size opening relative to the remainder of the channel 14. Each of the frame members 12 has an end face 18 cut at 45° to provide a mitre connection.

The assembly 10 also includes a pair of connection assemblies 20 each slidably located in the channel 14 adjacent a respective end face 18. The assembly 10 also includes an elongate link member 22 in the form of an L shaped sprung steel plate. The link member 22 is also locatable in the respective channels 14 in the frame members 12 beneath the connection assemblies 20, so as to interconnect two frame members 12.

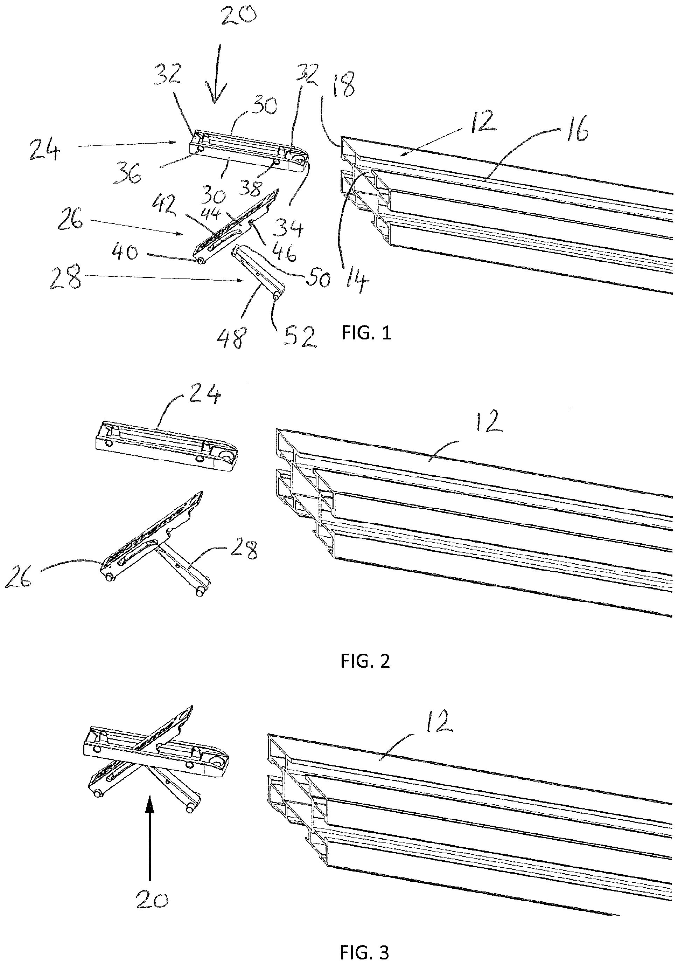

Each connection assembly 20 includes a body 24, a handle 26 and a connecting member 28. The body 24 comprises a pair of spaced side members 30 interconnected by webs 32 at each end. A fixing hole 34 is provided through the right hand web 32 as shown for instance in Fig. 1, to permit fixing in position on a frame member 12 if required.

A pair of aligned mounting holes 36, 38 are provided through the side members 30 with a first pair of mounting holes 36 adjacent the left hand end of the body 24 as shown for instance of Fig. 1, a second pair of mounting holes 38 towards but further spaced from the right hand end as shown for instance in Fig. 1 of the side members 30.

The body 24 should be of a size that it will probably be retained in position in the respective channel 14 by friction, and may require tapping to locate into the channel 14. This will depend to some extent on the precise dimensions of the channel 14 which can be variable to some degree. The body 24 is of a width that cannot be moved past the flanges 16.

The handle 26 has a generally n shaped profile with a pair of mounting lugs 40 at the left hand end as shown in Fig. 1 which are a snap fit in the first mounting holes 36 to provide a pivotal mounting between the handle 26 and the body 24. A pair of arcuate aligned slots 42 are provided in side walls 44 of the handle 26. A cut out 46 is provided in each side wall 44 spaced a short way to the right hand end of the slots 42. The side walls 44 stop a short distance before the right hand end as shown in Fig. 1 of the handle 26, to facilitate engagement thereof for instance by a person's finger.

The connecting member 28 is in the form of a bar 48 of a size to slidingly extend between the side members 30 of the body 24. A pair of mounting lugs 50 are provided extending outwardly on each side of the bar 48 at the left hand end as shown in Fig. 1. The mounting lugs 50 can be snap fitted to engage in the slots 42 in the handle 26. A larger pair of mounting lugs 52 are provided at the right hand end of the bar 48 as shown in Fig. 1, and can be snap fitted into the second pair of mounting holes 38 in the body 24.

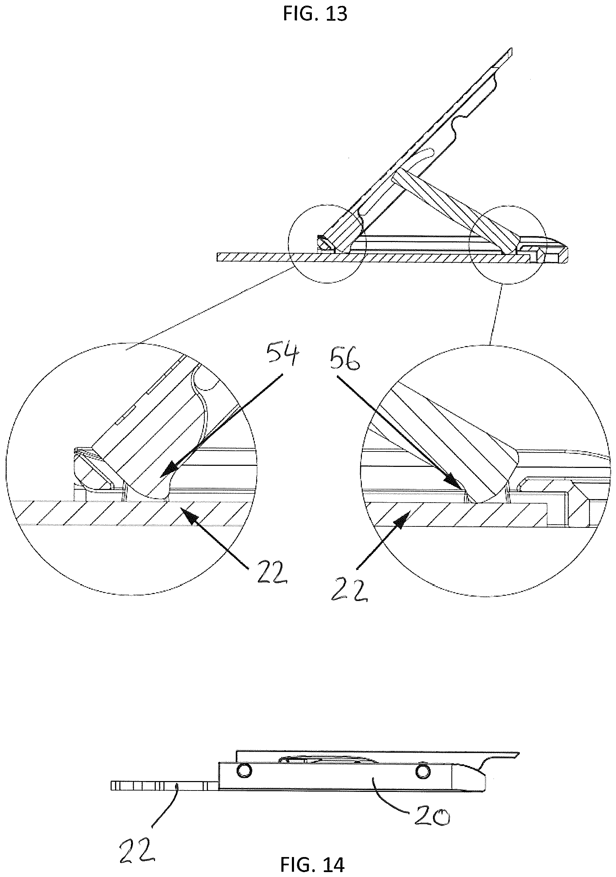

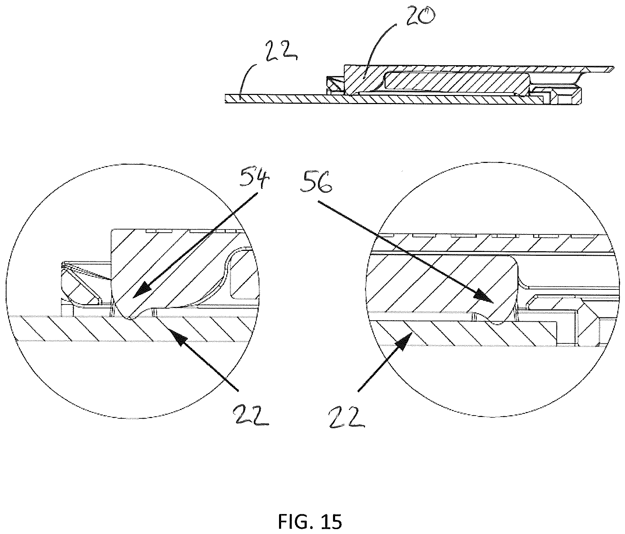

First and second cam members 54, 56 are provided respectively on the underside of the handle 26 at the left hand end thereof as shown in Fig. 1, and the underside of the connecting member 28 at the right hand end of the connecting member 28 as shown in Fig. 1. The first and second cam members 54, 56 are shown in more detail in Figs. 13 and 15.

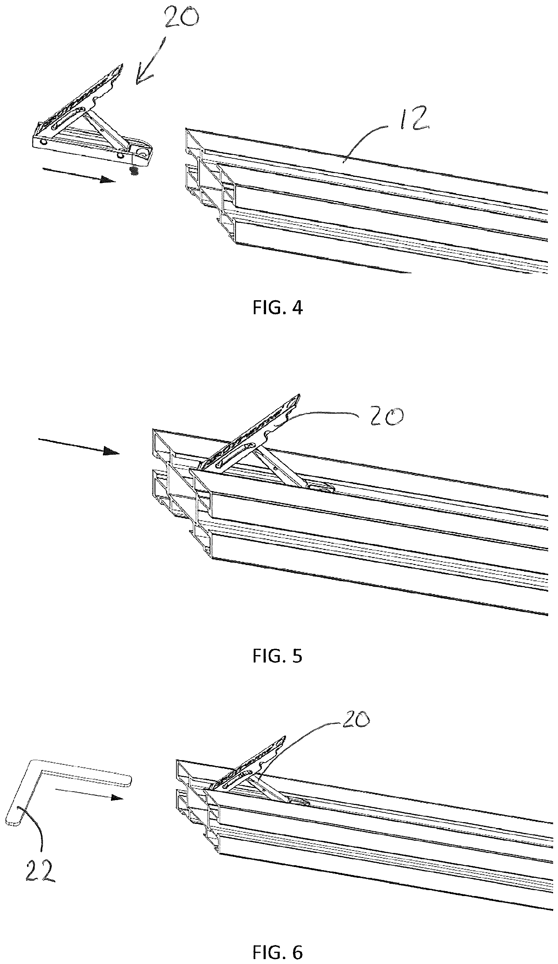

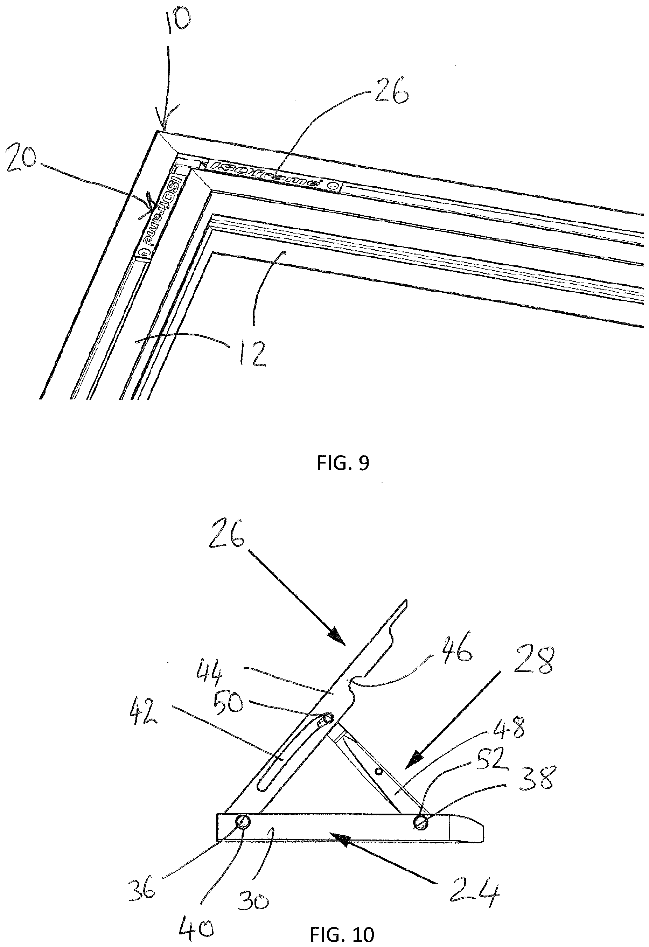

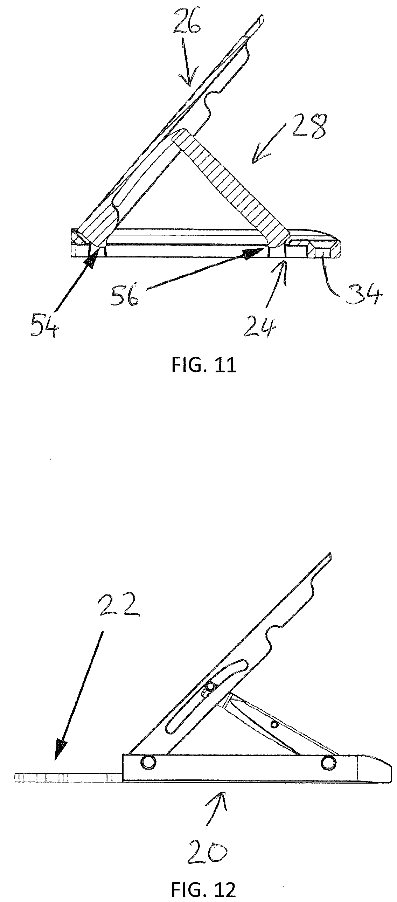

The connecting assemblies 10 are typically made from zinc by die casting and can be snap fitted together as shown in Figs. 1 to 4. The connection assemblies 10 are movable between a disengaged condition as shown for instance in Figs. 5 to 8 and 10 to 13, and an engaged condition as shown in Figs. 9, 14 and 15. In the engaged condition the handle 16 is pivotted upwardly away from the body 14 as far as is permitted by the connecting member 28.

The first smaller mounting lugs 50 of the connecting member 28 locate in the right hand ends of the slots 42. In this alignment the first and second cam members 54, 56 are in a relatively raised position.

To move a connection assembly 20 to an engaged condition, the handle 26 is moved downwardly. This causes clockwise rotation of the left hand end of the handle 26 moving the first cam member 54 into an engagement position extending further downwardly. As the handle 26 moves downwardly the connecting member 28 will rotate in an anti-clockwise direction and thus the second cam member 56 will rotate and extend further downwardly into an engaged position as shown for instance in Fig. 15.

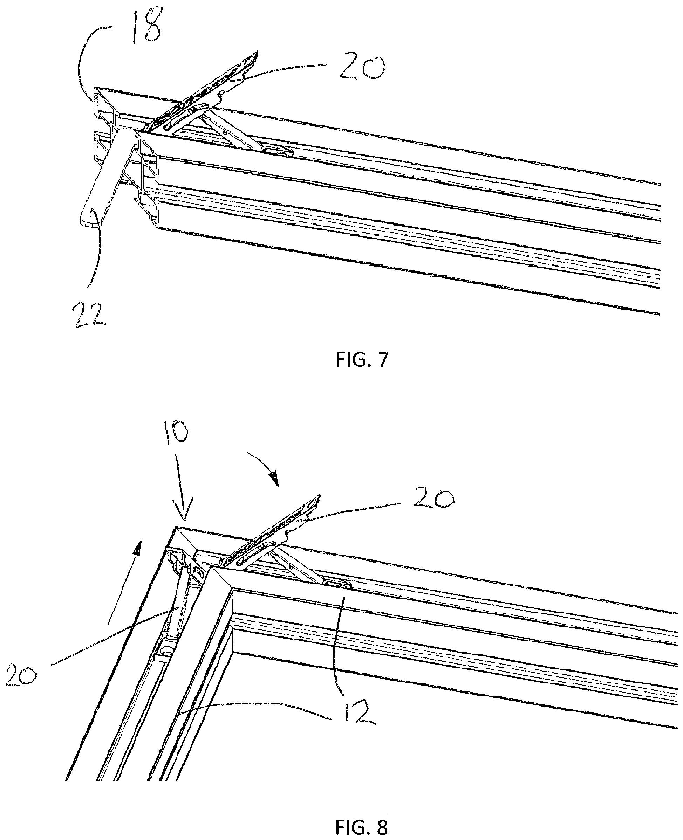

In the drawings Figs. 1 to 4 show the fitting together of an engagement assembly 20 and location thereof in a channel 14. Fig. 6 shows the link member 22 being brought into position and slid under the engagement assembly 20 as shown in Fig. 7.

The other frame member 12 is brought into position incorporating another engagement assembly 20, with both engagement assemblies 20 in a disengaged condition, and with the link member 22 extending between the frame members 12 and underneath the engagement assemblies 20. The engagement assemblies 20 are then moved into an engaged condition by moving the handles 26 downwardly and causing engagement of the first and second cam members 54, 56 with the link member 22, as outlined above, which rigidly clamps the assembly 10 together. Once fully engaged the handles 26 also locate within the channels 24 thereby being aesthetically pleasing and not interfering with operation of the frame members 12 in any way.

The assembly 10 provides engagement at two spaced positions with the link member on each frame member, which substantially prevents rotation thereof about the connection. The first and second cam members are brought into engagement with the link member in opposite directions to substantially prevent any unwanted sliding movement of the link member occurring during engagement or disengagement thereof.

The cam members just engage with the link member, whilst the link member provides the connection along the length thereof. This arrangement provides for a very strong connection.

The assembly 10 permits assembly and operation without the use of any tools, and extra fastening means etc. The connection assemblies can be assembled without tools. They can also be inserted into the respective frame members generally without tools, as can the link members.

This means that the connection assembly can be readily and quickly assembled, and also permits ready disconnection of the frame members. Not requiring tools nor extra fastening means means that there should never be a situation where the required tools or fastening means are not present which otherwise can result in the assembly being incorrectly assembled or disassembled, potentially causing damage thereto and/or an insufficiently rigid assembly.

The connection assembly and particularly the engagement assemblies are of relatively straightforward construction, and thus can be manufactured for long term and maintenance free use.

The invention therefore provides for a strong connection between two frame members, which can be readily engaged or disengaged by an unskilled operative, and without requirement for any use of tools or fastening means.

It is to be realised that a wide range of modifications may be made without departing from the scope of the claimed invention. For instance the engagement assemblies could take a different form, and could be made of different materials.

It is to be realised that frame members can be joined together at any relative orientation, and this is determined by the shape of the connecting member, and also the inclination of the end faces of the frame members. Whilst the invention has been described in terms of frame members used in a display apparatus, such a connection assembly could be used elsewhere.

## Claims

1. A connection assembly (10) for joining together two elongate frame members (12) suitable for a display apparatus, which frame members (12) each include a channel (14), wherein the channels (14) of the frame members (12) have flanges (16) extending along their openings such that the openings of the channels (14) are narrower than the remainder of the channels (14), which channels (14) are alignable together when the frame members (12) are connected, the assembly including an elongate link member (22) with a first part locatable in the channel (14) of a one of the frame members (12), and a second part locatable in the channel (14) of the other of the frame members, a pair of engagement assemblies (20) each locatable in the channel (14) of a respective frame member (12), the engagement assemblies (20) each include a body (24), a handle (26) and a connecting member (28), the handle being (26) pivotally mounted to the body (24) to move the assembly (20) between an engaged condition and a disengaged condition, the engagement assemblies (20) being selectively movable between the engaged condition where each handle (26) is moveable to cause a spaced pair of cam members (54, 56) to rotatably engage with the link member (22) to urge the same against the floor of the channel in a respective frame member (12), and the disengaged condition where the cam members (54, 56) do not urge the link member (22) against the channel (14), and the link member (22) is slidably movable along the channel (14); in each engagement assembly (20) the body (24) is slidably movable along the channel (14) of a frame member (12), but is of a size to be restrained within the channel (14) and only slidably movable therealong, and the connecting member (28) extends between the handle (26) and the body (24), spaced from the pivotal mounting of the handle (26) to the body (24).

2. A connection assembly according to claim 1, in which the engagement assemblies (20) are arranged such that in the engaged condition the handle (26) locates substantially within the channel (14) of a respective frame member (12).

3. A connection according to claims 1 or 2, in which the cam members (54, 56) are rotatably movable between engaged and disengaged positions in opposite directions to each other.

4. A connection assembly according to any of the preceding claims, in which a one of the cam members (54) is provided on the handle (26), and may be provided adjacent a pivotal mounting on the handle (26) to the body (24).

5. A connection assembly according to any of the preceding claims, in which the connecting member (28) is at one end pivotally mounted to the body (24).

6. A connection assembly according to claim 5 when dependent on claim 4, in which the other cam member (56) is provided on the connecting member (28) adjacent the pivotal mounting thereof to the body (24).

7. A connection assembly according to claims 5 or 6, in which the other end of the connecting member (28) is movably mounted to a slot or slots (42) in the handle (26).

8. A connection assembly according to any of the preceding claims, in which the handle (26) is a snap fit on the body (24), and the connecting member (28) may be a snap fit on the body (24).

9. A connection assembly according to any of the preceding claims, in which the engagement assemblies (20) are made of metal, may be made of zinc, and may be made by die casting.

10. A connection assembly according to any of the preceding claims, in which the first and second parts of the link member (22) are colinear.

11. A connection assembly according to any of claims 1 to 9, in which the first and second parts of the link member (22) are inclined relative to each other, and may be perpendicular to each other.

12. A connection assembly according to any of the preceding claims, in which the link member (22) is in the form of a length of plate, the plate may be of metal, and may be of sprung steel.

13. A frame assembly, the assembly comprising two elongate frame members (12) with one or more longitudinal channels (14) on the exterior of the elongate members (12), and a connection assembly (10) according to any of the preceding claims provided on ends of the frame members (12) and extending therebetween.

14. A frame assembly according to claim 13, in which the elongate members (12) are extrusions, and may be aluminium extrusions.

## Patentansprüche

1. Verbindungsanordnung (10) zum Verbinden von zwei für eine Anzeigevorrichtung geeigneten länglichen Rahmenelementen (12), deren Rahmenelemente (12) jeweils einen Kanal (14) umfassen, wobei die Kanäle (14) der Rahmenelemente (12) sich entlang ihrer Öffnungen erstreckende Flansche (16) aufweisen, sodass die Öffnungen der Kanäle (14) schmaler sind als der Rest der Kanäle (14), wobei die Kanäle (14) zueinander ausrichtbar sind, wenn die Rahmenelemente (12) verbunden sind, wobei die Anordnung ein längliches Verbindungselement (22) mit einem in dem Kanal (14) eines der Rahmenelemente (12) positionierbaren ersten Teil und ein in dem Kanal (14) des anderen Rahmenelementes positionierbaren zweiten Teil umfasst, ein Paar Eingriffsanordnungen (20), jeweils in dem Kanal (14) eines entsprechenden Rahmenelementes (12) positionierbar, wobei die Eingriffsanordnungen (20) jeweils einen Körper (24), einen Griff (26) und ein Verbindungselement (28) umfassen, wobei der Griff (26) drehbar an dem Körper (24) befestigt ist, um die Anordnung (20) zwischen einem verbundenen Zustand und einem unverbundenen Zustand zu bewegen, wobei die Eingriffsanordnung (20) wahlweise zwischen dem verbundenen Zustand, in dem jeder Griff (26) bewegbar ist, um zu bewirken, dass ein beabstandetes Paar an Steuerelementen (54, 56) drehbar mit einem Verbindungselement (22) eingreift, um dieses gegen den Boden des Kanals in dem jeweiligen Rahmenelement (12) zu drücken, und dem unverbundenen Zustand, in dem die Steuerelemente (54, 56) die Verbindungselemente (22) nicht gegen den Kanal (14) drücken, bewegbar ist, und das Verbindungselement (22) entlang dem Kanal (14) verschiebbar beweglich ist; in jeder Eingriffsanordnung (20) ist der Körper (24) entlang des Kanals (14) eines Rahmenelementes (12) verschiebbar beweglich, weist aber eine Größe auf, um im Kanal (14) eingespannt und nur dort entlang verschiebbar beweglich zu sein, und das Verbindungselement (28) sich zwischen dem Griff (26) und dem Körper (24), beabstandet von der drehbaren Befestigung des Griffs (26) am Körper (24), erstreckt.

2. Verbindungsanordnung nach Anspruch 1, **dadurch gekennzeichnet, dass** die Eingriffsanordnungen (20) so angeordnet sind, dass im verbundenen Zustand der Griff (26) im Wesentlichen im Kanal (14) des entsprechenden Rahmenelementes (12) positioniert ist.

3. Verbindungsanordnung nach Anspruch 1 oder 2, **dadurch gekennzeichnet, dass** die Steuerelemente (54, 56) drehbar zwischen verbundenen und unverbundenen Positionen in entgegengesetzte Richtungen zueinander bewegbar sind.

4. Verbindungsanordnung nach einem der vorhergehenden Ansprüche, **dadurch gekennzeichnet, dass** eines der Steuerelemente (54) am Griff (26) vorgesehen ist, und benachbart zu einer drehbaren Befestigung am Griff (26) zum Körper (24) vorgesehen werden kann.

5. Verbindungsanordnung nach einem der vorhergehenden Ansprüche, **dadurch gekennzeichnet, dass** das Verbindungselement (28) an einem Ende drehbar am Körper (24) befestigt ist.

6. Verbindungsanordnung nach Anspruch 5 in Abhängigkeit von Anspruch 4, **dadurch gekennzeichnet, dass** das andere Steuerelement (56) am Verbindungselement (28) benachbart zu der drehbaren Befestigung hiervon am Körper (24) vorgesehen ist.

7. Verbindungsanordnung nach Anspruch 5 oder 6, **dadurch gekennzeichnet, dass** das andere Ende des Verbindungselementes (28) bewegbar zu einer Aussparung oder Aussparungen (42) im Griff (26) befestigt ist.

8. Verbindungsanordnung nach einem der vorhergehenden Ansprüche, **dadurch gekennzeichnet, dass** der Griff (26) am Körper (24) verrastet, und das Verbindungselement (28) am Körper (24) verrastet werden kann.

9. Verbindungsanordnung nach einem der vorhergehenden Ansprüche, **dadurch gekennzeichnet, dass** die Eingriffsanordnungen (20) aus Metall hergestellt sind, aus Zink hergestellt sein können, und aus Druckguss hergestellt sein können.

10. Verbindungsanordnung nach einem der vorhergehenden Ansprüche, **dadurch gekennzeichnet, dass** die ersten und zweiten Teile des Verbindungselementes (22) kollinear sind.

11. Verbindungsanordnung nach einem der Ansprüche 1 bis 9, **dadurch gekennzeichnet, dass** die ersten und zweiten Teile der Verbindungselemente (22) relativ zueinander geneigt sind, und zueinander lotrecht sein können.

12. Verbindungsanordnung nach einem der vorhergehenden Ansprüche, **dadurch gekennzeichnet, dass** das Verbindungselement (22) die Form einer länglichen Platte aufweist, wobei die Platte aus Metall sein kann und aus Federstahl sein kann.

13. Rahmenanordnung, wobei die Anordnung zwei längliche Rahmenelemente (12) mit einem oder mehreren Längskanälen (14) auf der Außenseite der länglichen Elemente (12) aufweist, und eine Verbindungsanordnung (10) gemäß einem der vorhergehenden Ansprüche am Ende der Rahmenelemente (12) vorgesehen ist und sich dazwischen erstreckt.

14. Rahmenanordnung nach Anspruch 13, **dadurch gekennzeichnet, dass** die länglichen Elemente (12) Strangpressteile sind, und Strangpressteile aus Aluminium sein können.

## Revendications

1. Ensemble de connexion (10) pour assembler deux éléments de châssis allongés (12) adaptés à un appareil d'affichage, lesquels éléments de châssis (12) comprenant chacun un canal (14), dans lequel les canaux (14) des éléments de châssis (12) ont des rebords (16) s'étendant le long de leurs ouvertures de telle sorte que les ouvertures des canaux (14) sont plus étroites que le reste des canaux (14), lesquels canaux (14) peuvent être alignés ensemble lorsque les éléments de châssis (12) sont connectés, l'ensemble comprenant un élément de liaison allongé (22) avec une première partie pouvant être placée dans le canal (14) d'un des éléments de châssis (12), et une seconde partie pouvant être placée dans le canal (14) de l'autre des éléments de châssis, une paire d'ensembles d'engagement (20) chacun pouvant être placé dans le canal (14) d'un élément de châssis respectif (12), les ensembles d'engagement (20) comprenant chacun un corps (24), une poignée (26) et un élément de connexion (28), la poignée étant (26) montée pivotante sur le corps (24) pour déplacer l'ensemble (20) entre un état engagé et un état désengagé, les ensembles d'engagement (20) pouvant être déplacés de manière sélective entre l'état engagé, dans lequel chaque poignée (26) peut être déplacée de manière à amener une paire espacée d'éléments de cames (54, 56) à venir s'engager de manière rotative avec l'élément de liaison (22) afin de le pousser contre le plancher du canal dans un élément de châssis respectif (12), et l'état désengagé dans lequel les éléments de came (54, 56) ne poussent pas l'élément de liaison (22) contre le canal (14), et l'élément de liaison (22) est mobile de manière coulissante le long du canal (14) ; dans chaque ensemble d'engagement (20), le corps (24) peut être déplacé de manière coulissante le long du canal (14) d'un élément de châssis (12), mais a une taille suffisante pour être retenu dans le canal (14) et ne peut qu'être déplacé de manière coulissante le long de celui-ci, et l'élément de liaison (28) s'étend entre la poignée (26) et le corps (24), à distance du montage pivotant de la poignée (26) sur le corps (24).

2. Ensemble de connexion selon la revendication 1, dans lequel les ensembles d'engagement (20) sont agencés de telle sorte que, dans l'état engagé, la poignée (26) se situe sensiblement dans le canal (14) d'un élément de châssis respectif (12).

3. Connexion selon la revendication 1 ou 2, dans laquelle tous les éléments de came (54, 56) sont déplaçables de manière rotative entre des états engagé et désengagé dans des directions opposées l'une par rapport à l'autre.

4. Ensemble de connexion selon l'une quelconque des revendications précédentes, dans lequel un des éléments de came (54) est prévu sur la poignée (26), et peut être prévu à proximité d'un montage pivotant sur la poignée (26) sur le corps. (24).

5. Ensemble de connexion selon l'une quelconque des revendications précédentes, dans lequel l'élément de connexion (28) est monté de manière pivotante au niveau d'une extrémité sur le corps (24).

6. Ensemble de connexion selon la revendication 5, lorsqu'elle dépend de la revendication 4, dans lequel l'autre élément de came (56) est prévu sur l'élément de connexion (28) adjacent au montage pivotant de ce dernier sur le corps (24).

7. Ensemble de connexion selon les revendications 5 ou 6, dans lequel l'autre extrémité de l'élément de connexion (28) est montée de manière mobile sur une fente ou des fentes (42) dans la poignée (26).

8. Ensemble de connexion selon l'une quelconque des revendications précédentes, dans lequel la poignée (26) est un système de fixation par encliquetage sur le corps (24), et l'élément de connexion (28) peut être un système de fixation par encliquetage sur le corps (24).

9. Ensemble de connexion selon l'une quelconque des revendications précédentes, dans lequel les ensembles d'engagement (20) sont réalisés en métal, peuvent être réalisés en zinc et peuvent être réalisés par moulage sous pression.

10. Ensemble de connexion selon l'une quelconque des revendications précédentes, dans lequel les première et seconde parties de l'élément de liaison (22) sont colinéaires.

11. Ensemble de connexion selon l'une quelconque des revendications 1 à 9, dans lequel les première et seconde parties de l'élément de liaison (22) sont inclinées l'une par rapport à l'autre et peuvent être perpendiculaires l'une à l'autre.

12. Ensemble de connexion selon l'une quelconque des revendications précédentes, dans lequel l'élément de liaison (22) se présente sous la forme d'une longueur de plaque, la plaque peut être en métal et peut être en acier à ressort.

13. Ensemble de châssis, l'ensemble comprenant deux éléments de châssis allongés (12) avec un ou plusieurs canaux longitudinaux (14) à l'extérieur des éléments allongés (12), et un ensemble de connexion (10) selon l'une quelconque des revendications précédentes prévues sur les extrémités des éléments de châssis (12) et s'étendant entre elles.

14. Ensemble de châssis selon la revendication 13, dans lequel les éléments allongés (12) sont des extrusions, et peuvent être des extrusions d'aluminium.
